# EUROPÄISCHE PATENTANMELDUNG

(11) **EP 3 671 144 A1**
(43) Veröffentlichungstag der Anmeldung: **24.06.2020**
(21) Anmeldenummer: 18214465.9
(22) Anmeldetag: 20.12.2018
(51) Int. Cl.: G01H 1/00, G01H 1/10, G01H 11/08, G01M 13/028, G01M 13/045

(54) **ERFASSEN VON MASCHINENSCHWINGUNGEN**

(71) Anmelder: Siemens Aktiengesellschaft, 80333 München (DE)
(72) Erfinder: BORMANN, Ulf, 90518 Altdorf (DE); KLOS, Hans-Henning, 91249 Weigendorf (DE); SCHEIBNER, Dirk, 90473 Nürnberg (DE)

(57) **Zusammenfassung**

Die Erfindung betrifft eine Messvorrichtung (1) zum Erfassen von Maschinenschwingungen einer Maschine (27). Die Messvorrichtung (1) umfasst einen ersten Vibrationssensor (3) zum Erfassen von Maschinenschwingungen entlang wenigstens zweier nicht zueinander paralleler Schwingungsachsen, eine Auswerteeinheit (5) zum Ermitteln einer Hauptschwingungsachse (29) der von dem ersten Vibrationssensor (3) erfassten Maschinenschwingungen und einen zweiten Vibrationssensor (7), der zum Erfassen von Maschinenschwingungen entlang der von der Auswerteeinheit (5) ermittelten Hauptschwingungsachse (29) ausrichtbar ist. Der zweite Vibrationssensor (7) weist weniger Messachsen und eine höhere Messgenauigkeit, eine höhere Bandbreite für Schwingungsfrequenzen von Maschinenschwingungen, ein besseres Anti-Aliasing-Verhalten und/oder ein besseres Signal-Rausch-Verhältnis als der erste Vibrationssensor (3) auf.

## Beschreibung

Die Erfindung betrifft eine Messvorrichtung und ein Verfahren zum Erfassen von Maschinenschwingungen einer Maschine.

Das Erfassen von Maschinenschwingungen einer Maschine ist ein wesentlicher Bestandteil einer Zustandsüberwachung der Maschine, dem so genannten Condition-Monitoring. Condition-Monitoring wird insbesondere im industriellen Umfeld zur zustandsorientierten Instandhaltung von Maschinen eingesetzt. Da Ausfälle einer Maschine sowohl zu sicherheitskritischen Zuständen der Maschine als auch zu gravierenden Kosten nicht nur an der Maschine selbst sondern vor allem auch an den Folgeprozessen führen können, wird Condition-Monitoring verwendet, um solchen Ausfällen vorzubeugen. Aufgrund der Daten, die durch Condition-Monitoring gewonnen werden, kann der Zustand einer überwachten Maschine analysiert und dementsprechend zustandsorientiert eine Wartung, eine Reparatur oder ein Austausch der Maschine veranlasst werden. Dadurch ermöglicht Condition-Monitoring ein großes Potential zur Kosteneinsparung, da die Lebensdauer kritischer Maschinenelemente besser ausgenutzt werden kann und gleichzeitig Instandsetzungsmaßnahmen in Abstimmung mit einem Produktionsplan terminiert werden können.

Je nach Güte der Sensorik und Auswertung können mit dem Condition-Monitoring sogar Hinweise auf die Art eines möglichen Schadens gegeben werden. Meist wird bei dem Condition-Monitoring der aktuelle Zustand einer Maschine mit einem Referenzzustand verglichen und ab einer bestimmten Abweichung des aktuellen Zustands von dem Referenzzustand werden Meldungen erzeugt, um eine Wartung, eine Reparatur oder einen Austausch der Maschine zu veranlassen.

Sowohl die Amplituden als auch die Frequenzen von Maschinenschwingungen einer Maschine geben wesentliche Hinweise auf den Zustand der Maschine. Bei der Schwingungsanalyse werden im Idealfall Schwingungen entlang aller drei Achsen eines räumlichen kartesischen Koordinatensystems untersucht. Wenn die Analyse dagegen auf Schwingungen entlang nur einer Achse beschränkt wird, besteht die Gefahr, dass wesentliche Schwingungen nicht oder nur unzureichend erkannt werden. Trotzdem werden Schwingungsanalysen aus Kostengründen häufig nur für Schwingungen entlang einer Achse durchgeführt. Dies genügt der Norm DIN ISO 10816-3 zur Bewertung von Schwingungen bestimmter industrieller Maschinen, sofern Schwingungen entlang einer Hauptschwingungsrichtung der Maschine erfasst und ausgewertet werden. Die Schwierigkeit ist jedoch, dass die Hauptschwingungsrichtung meist nicht bekannt ist. Erschwerend kommt hinzu, dass sich die Hauptschwingungsrichtung bei einer Veränderung einer Belastung der Maschine, aber auch bei einer Unwucht ändern kann.

Insbesondere im industriellen Umfeld werden Maschinenschwingungen meist mit piezoelektrischen Beschleunigungssensoren gemessen. Diese Sensoren bieten den Vorteil, dass sie die mit den Schwingungen verbundenen Beschleunigungen mit geringem Rauschen und hoher Bandbreite für die Schwingungsfrequenzen ermitteln. Allerdings sind diese Sensoren einschließlich der benötigten Kabel und der Messwertaufbereitung sehr kostspielig. Zur Messung entlang dreier verschiedener Achsen wird für jede Achse ein Sensor benötigt, wodurch die Kosten entsprechend steigen. Aus diesem Grund wird zur Schwingungsanalyse meist nur ein piezoelektrischer Beschleunigungssensor verwendet. Ein Verzicht auf eine normgerechte Ausrichtung des Sensors auf die Hauptschwingungsrichtung reduziert jedoch häufig die Aussagekraft der Messergebnisse.

Der Erfindung liegt die Aufgabe zugrunde, eine verbesserte Messvorrichtung und ein verbessertes Verfahren zum Erfassen von Maschinenschwingungen einer Maschine anzugeben.

Die Aufgabe wird erfindungsgemäß durch eine Messvorrichtung mit den Merkmalen des Anspruchs 1 und ein Verfahren mit den Merkmalen des Anspruchs 11 gelöst.

Vorteilhafte Ausgestaltungen der Erfindung sind Gegenstand der Unteransprüche.

Eine erfindungsgemäße Messvorrichtung zum Erfassen von Maschinenschwingungen einer Maschine umfasst einen ersten Vibrationssensor zum Erfassen von Maschinenschwingungen entlang wenigstens zweier nicht zueinander paralleler Schwingungsachsen, eine Auswerteeinheit zum Ermitteln einer Hauptschwingungsachse der von dem ersten Vibrationssensor erfassten Maschinenschwingungen und einen zweiten Vibrationssensor, der zum Erfassen von Maschinenschwingungen entlang der von der Auswerteeinheit ermittelten Hauptschwingungsachse ausrichtbar ist. Der zweite Vibrationssensor weist weniger Messachsen als der erste Vibrationssensor auf. Ferner weist der zweite Vibrationssensor eine höhere Messgenauigkeit und/oder eine höhere Bandbreite für Schwingungsfrequenzen von Maschinenschwingungen und/oder ein besseres Anti-Aliasing-Verhalten und/oder ein besseres Signal-Rausch-Verhältnis als der erste Vibrationssensor auf.

Die Erfindung sieht also vor, einen ersten Vibrationssensor zu verwenden, um einen höherwertigen zweiten Vibrationssensor auf eine Hauptschwingungsachse von Maschinenschwingungen einer Maschine auszurichten. Dadurch können Maschinenschwingungen entlang der Hauptschwingungsachse mit einem hochwertigen Vibrationssensor erfasst werden, ohne hierfür einen kostspieligen dreiachsigen Vibrationssensor einzusetzen. Zum Bestimmen der Hauptschwingungsachse kann ein einfacher und kostengünstiger mehrachsiger Vibrationssensor verwendet werden.

Bei einer Ausgestaltung der Erfindung weist der erste Vibrationssensor drei Messachsen auf und/oder der zweite Vibrationssensor weist eine Messachse auf. Durch einen dreiachsigen ersten Vibrationssensor kann die Hauptschwingungsachse zuverlässig ermittelt werden, insbesondere wenn nicht bekannt ist, in welcher Ebene die Hauptschwingungsachse verläuft. Die Verwendung eines einachsigen zweiten Vibrationssensors reduziert die Kosten gegenüber der Verwendung eines mehrachsigen zweiten Vibrationssensors.

Bei einer weiteren Ausgestaltung der Erfindung ist der zweite Vibrationssensor als ein piezoelektrischer Beschleunigungssensor ausgebildet. Dies ermöglicht vorteilhaft eine besonders präzise Erfassung der Maschinenschwingungen entlang der Hauptschwingungsachse mit einer hohen Bandbreite für die Schwingungsfrequenzen von Maschinenschwingungen.

Eine weitere Ausgestaltung der Erfindung sieht eine an der Maschine anordenbare Ausrichtvorrichtung zum Ausrichten des zweiten Vibrationssensors entlang der Hauptschwingungsachse vor. Dadurch kann das Ausrichten des zweiten Vibrationssensors vorteilhaft vereinfacht und verbessert werden.

Beispielsweise weist die Ausrichtvorrichtung einen Träger auf, an dem der zweite Vibrationssensor anordenbar ist und der zum Ausrichten des zweiten Vibrationssensors über ein Gelenk bewegbar ist. Diese Ausgestaltung der Erfindung ermöglicht ein Ausrichten des zweiten Vibrationssensors durch Bewegen des Trägers der Ausrichtvorrichtung.

Alternativ oder zusätzlich ist der zweite Vibrationssensor in voneinander verschiedenen Ausrichtungen an der Ausrichtvorrichtung befestigbar. Beispielsweise weist die Ausrichtvorrichtung mehrere Befestigungsfassungen auf, in denen der zweite Vibrationssensor in voneinander verschiedenen Ausrichtungen befestigbar ist. Beispielsweise weist jede Befestigungsfassung ein Befestigungsinnengewinde auf und der zweite Vibrationssensor weist ein Befestigungsaußengewinde auf, das in das Befestigungsinnengewinde jeder Befestigungsfassung einschraubbar ist. Diese Ausgestaltung der Erfindung ermöglicht ein Ausrichten des zweiten Vibrationssensors durch das Befestigen des zweiten Vibrationssensors in einer zu der Hauptschwingungsachse korrespondierenden Ausrichtung an der Ausrichtvorrichtung.

Bei einer weiteren Ausgestaltung der Erfindung ist der erste Vibrationssensor an der Ausrichtvorrichtung angeordnet. Dadurch kann insbesondere auch eine Ausrichtung der Ausrichtvorrichtung selbst mit dem ersten Vibrationssensor ermittelt werden, was beispielsweise zum Ausrichten des bewegbaren Trägers der Ausrichtvorrichtung gemäß der oben genannten Ausgestaltung der Erfindung vorteilhaft ist.

Eine weitere Ausgestaltung der Erfindung sieht eine Signalisierungsvorrichtung vor, die von der Auswerteeinheit direkt oder indirekt steuerbar und dazu eingerichtet ist, eine Position für den zweiten Vibrationssensor zu dessen Ausrichten entlang der Hauptschwingungsachse anzuzeigen. Dadurch wird das korrekte Ausrichten des zweiten Vibrationssensors vorteilhaft visuell durch die Signalisierungsvorrichtung unterstützt.

Eine weitere Ausgestaltung der Erfindung sieht eine Signalisierungsvorrichtung vor, die von der Auswerteeinheit direkt oder indirekt steuerbar und dazu eingerichtet ist, durch wenigstens ein optisches oder akustisches Signal zu signalisieren, ob der zweite Vibrationssensor entlang der Hauptschwingungsachse ausgerichtet ist. Dadurch wird die korrekte Ausrichtung des zweiten Vibrationssensors vorteilhaft visuell oder akustisch durch die Signalisierungsvorrichtung unterstützt. Ferner kann auch eine Fehlausrichtung des zweiten Vibrationssensors signalisiert werden, beispielsweise durch Ausgeben eines optischen oder akustischen Warnsignals.

Bei dem erfindungsgemäßen Verfahren zum Erfassen von Maschinenschwingungen einer Maschine mit einer erfindungsgemäßen Messvorrichtung werden von dem ersten Vibrationssensor Maschinenschwingungen entlang wenigstens zweier nicht zueinander paralleler Schwingungsachsen erfasst, von der Auswerteeinheit wird eine Hauptschwingungsachse der von dem ersten Vibrationssensor erfassten Maschinenschwingungen ermittelt, der zweite Vibrationssensor wird entlang der von der Auswerteeinheit ermittelten Hauptschwingungsachse ausgerichtet und von dem zweiten Vibrationssensor werden Maschinenschwingungen entlang der von der Auswerteeinheit ermittelten Hauptschwingungsachse erfasst. Die Vorteile des erfindungsgemäßen Verfahrens entsprechen den oben bereits genannten Vorteilen der erfindungsgemäßen Messvorrichtung.

Eine Ausgestaltung des erfindungsgemäßen Verfahrens sieht vor, dass von der Auswerteeinheit zum Ermitteln der Hauptschwingungsachse aus den mit dem ersten Vibrationssensor erfassten Maschinenschwingungen für jede Schwingungsachse ein Messwertvektor, dessen Richtung parallel zu der Schwingungsachse ist und dessen Betrag ein Maß für eine Schwingungsstärke der Maschinenschwingungen entlang der Schwingungsachse ist, ermittelt wird. Die für die Schwingungsachsen ermittelten Messwertvektoren werden zu einer Vektorsumme addiert und als Hauptschwingungsachse wird eine Gerade ermittelt, die parallel zu der Vektorsumme verläuft. Dies ermöglicht eine vektorielle Ermittlung der Hauptschwingungsachse anhand der mit dem ersten Vibrationssensor erfassten Maschinenschwingungen.

Beispielsweise wird als Schwingungsstärke der Maschinenschwingungen entlang einer Schwingungsachse ein Extremwert oder ein Effektivwert oder ein Mittelwert oder ein Integral der erfassten Maschinenschwingungen ermittelt. Diese Ausgestaltungen der Erfindung ermöglichen eine Ermittlung der Hauptschwingungsachse mit einem relativ geringen Rechenaufwand.

Alternativ wird zum Ermitteln der Schwingungsstärke der Maschinenschwingungen entlang einer Schwingungsachse ein Histogramm der erfassten Maschinenschwingungen ermittelt und ausgewertet, oder es wird eine schnelle Fourier-Transformation der erfassten Maschinenschwingungen durchgeführt und ausgewertet. Diese Ausgestaltungen der Erfindung ermöglichen eine präzisere Ermittlung der Hauptschwingungsachse durch eine komplexere, insbesondere frequenzabhängige Auswertung der von dem ersten Vibrationssensor erfassten Maschinenschwingungen.

Eine weitere Ausgestaltung des erfindungsgemäßen Verfahrens sieht vor, dass der zweite Vibrationssensor mit einer Ausrichtvorrichtung, die an der Maschine angeordnet wird, entlang der Hauptschwingungsachse ausgerichtet wird, indem der zweite Vibrationssensor in einer zu der Hauptschwingungsachse korrespondierenden Ausrichtung an der Ausrichtvorrichtung befestigt wird, oder indem der zweite Vibrationssensor an einem bewegbaren Träger der Ausrichtvorrichtung angeordnet wird und der Träger zum Ausrichten des zweiten Vibrationssensors bewegt wird.

Eine weitere Ausgestaltung des erfindungsgemäßen Verfahrens sieht vor, dass mit einer von der Auswerteeinheit direkt oder indirekt gesteuerten Signalisierungsvorrichtung eine Position für den zweiten Vibrationssensor zu dessen Ausrichten entlang der Hauptschwingungsachse angezeigt wird und/oder mit wenigstens einem optischen oder akustischen Signal signalisiert wird, ob der zweite Vibrationssensor entlang der Hauptschwingungsachse ausgerichtet ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: ein Blockdiagramm eines Ausführungsbeispiels einer erfindungsgemäßen Messvorrichtung,
- FIG 2: eine Seitenansicht eines Ausführungsbeispiels einer Ausrichtvorrichtung einer erfindungsgemäßen Messvorrichtung,
- FIG 3: eine Maschine, an der eine erfindungsgemäße Messvorrichtung angeordnet ist.

Einander entsprechende Teile sind in den Figuren mit denselben Bezugszeichen versehen.

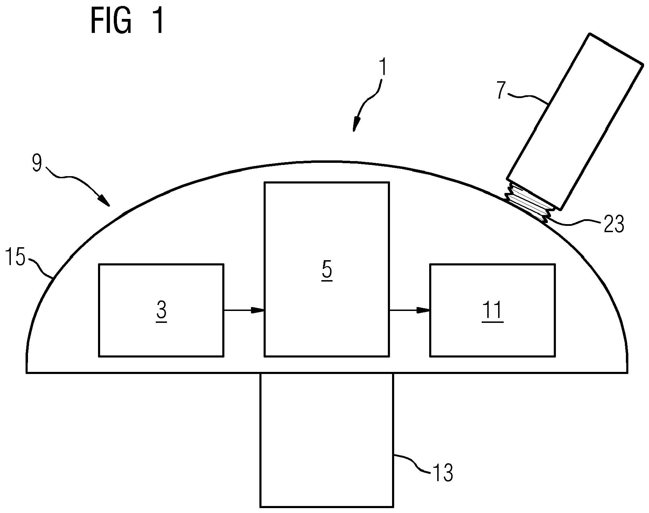

FIG 1 zeigt ein Blockdiagramm eines Ausführungsbeispiels einer erfindungsgemäßen Messvorrichtung 1 zum Erfassen von Maschinenschwingungen einer Maschine 27. Die Messvorrichtung 1 umfasst einen ersten Vibrationssensor 3, eine Auswerteeinheit 5, einen zweiten Vibrationssensor 7, eine Ausrichtvorrichtung 9 und eine Signalisierungsvorrichtung 11.

Von dem ersten Vibrationssensor 3 werden Maschinenschwingungen entlang wenigstens zweier nicht zueinander paralleler Schwingungsachsen erfasst. Vorzugsweise ist der erste Vibrationssensor 3 als ein dreiachsiger Vibrationssensor ausgebildet, der Maschinenschwingungen entlang dreier nicht zueinander paralleler, vorzugsweise zueinander senkrechter Schwingungsachsen erfasst. Er kann aber auch als ein zweiachsiger Vibrationssensor ausgebildet sein, der Maschinenschwingungen entlang zweier nicht zueinander paralleler, vorzugsweise zueinander senkrechter Schwingungsachsen erfasst. Beispielsweise ist der erste Vibrationssensor 3 als ein MEMS-Beschleunigungssensor (MEMS = microelectromechanical system) ausgebildet, das heißt als ein Beschleunigungssensor, der als ein mikroelektromechanisches System ausgebildet ist. Ein MEMS-Beschleunigungssensor ist kostengünstig und platzsparend. Der erste Vibrationssensor 3 kann an der Ausrichtvorrichtung 9 angeordnet sein oder separat an der Maschine 27 anordenbar sein.

Von der Auswerteeinheit 5 wird eine Hauptschwingungsachse 29 der von dem ersten Vibrationssensor 3 erfassten Maschinenschwingungen ermittelt. Dazu wird von der Auswerteeinheit 5 aus den mit dem ersten Vibrationssensor 3 erfassten Maschinenschwingungen für jede Schwingungsachse, entlang derer von dem ersten Vibrationssensor 3 Maschinenschwingungen erfasst werden, ein Messwertvektor ermittelt, dessen Richtung parallel zu der Schwingungsachse ist und dessen Betrag ein Maß für eine Schwingungsstärke der Maschinenschwingungen entlang der Schwingungsachse ist. Ferner werden von der Auswerteeinheit 5 die für die Schwingungsachsen ermittelten Messwertvektoren zu einer Vektorsumme addiert und als Hauptschwingungsachse 29 wird eine Gerade ermittelt, die parallel zu der Vektorsumme verläuft.

Als Schwingungsstärke der Maschinenschwingungen entlang einer Schwingungsachse wird von der Auswerteeinheit 5 beispielsweise ein Extremwert, Effektivwert, Mittelwert oder Integral der erfassten Maschinenschwingungen ermittelt.

Alternativ wird von der Auswerteeinheit 5 zum Ermitteln der Schwingungsstärke der Maschinenschwingungen entlang einer Schwingungsachse ein Histogramm der erfassten Maschinenschwingungen ermittelt und ausgewertet, oder es wird von der Auswerteeinheit 5 zum Ermitteln der Schwingungsstärke der Maschinenschwingungen entlang einer Schwingungsachse eine schnelle Fourier-Transformation der erfassten Maschinenschwingungen durchgeführt und ausgewertet. Bei der Auswertung des Histogramms beziehungsweise der schnellen Fourier-Transformation können die erfassten Messwerte optional gewichtet werden. Beispielsweise kann eine Gewichtung nach Frequenzbereichen von Frequenzen der Maschinenschwingungen vorgenommen werden. Dadurch können beispielsweise Maschinenschwingungen mit Frequenzen, die für die Sicherheit und/oder Funktionsfähigkeit der Maschine 27 besonders relevant sind, stärker als Maschinenschwingungen anderer Frequenzen gewichtet werden.

Die Auswerteeinheit 5 ist beispielsweise als ein Mikroprozessor ausgebildet. Die Auswerteeinheit 5 kann an oder in der Ausrichtvorrichtung 9 angeordnet sein, sie kann aber auch an einem anderen Ort angeordnet sein. Die von dem ersten Vibrationssensor 3 erfassten Messwerte werden der Auswerteeinheit 5 kabelgebunden oder kabellos übermittelt.

Der zweite Vibrationssensor 7 ist an verschiedenen Positionen an der Ausrichtvorrichtung 9 befestigbar, wobei der zweite Vibrationssensor 7 an diesen Positionen voneinander verschiedene Ausrichtungen aufweist. Der zweite Vibrationssensor 7 weist eine höhere Messgenauigkeit und/oder eine höhere Bandbreite für Schwingungsfrequenzen von Maschinenschwingungen und/oder ein besseres Anti-Aliasing-Verhalten und/oder ein besseres Signal-Rausch-Verhältnis als der erste Vibrationssensor 3 auf. Ferner weist der zweite Vibrationssensor 7 weniger Messachsen als der erste Vibrationssensor 3 auf, vorzugsweise nur eine Messachse. Beispielsweise ist der zweite Vibrationssensor 7 als ein piezoelektrischer Beschleunigungssensor ausgebildet.

Die Ausrichtvorrichtung 9 ist an der Maschine 27 befestigbar. Beispielsweise weist die Ausrichtvorrichtung 9 dazu einen Befestigungszapfen 13 zum Befestigen der Ausrichtvorrichtung 9 an der Maschine 27 auf. Alternativ kann die Ausrichtvorrichtung 9 durch andere Befestigungsmittel, beispielsweise durch wenigstens eine Klemme, wenigstens einen Magneten oder durch Kleben, an der Maschine 27 befestigbar sein. Ferner weist die Ausrichtvorrichtung 9 einen Träger 15 auf, an dem der zweite Vibrationssensor 7 an verschiedenen Positionen befestigbar ist, beispielsweise jeweils durch eine Schraubverbindung, Klemmverbindung, Magnetverbindung oder Klebverbindung.

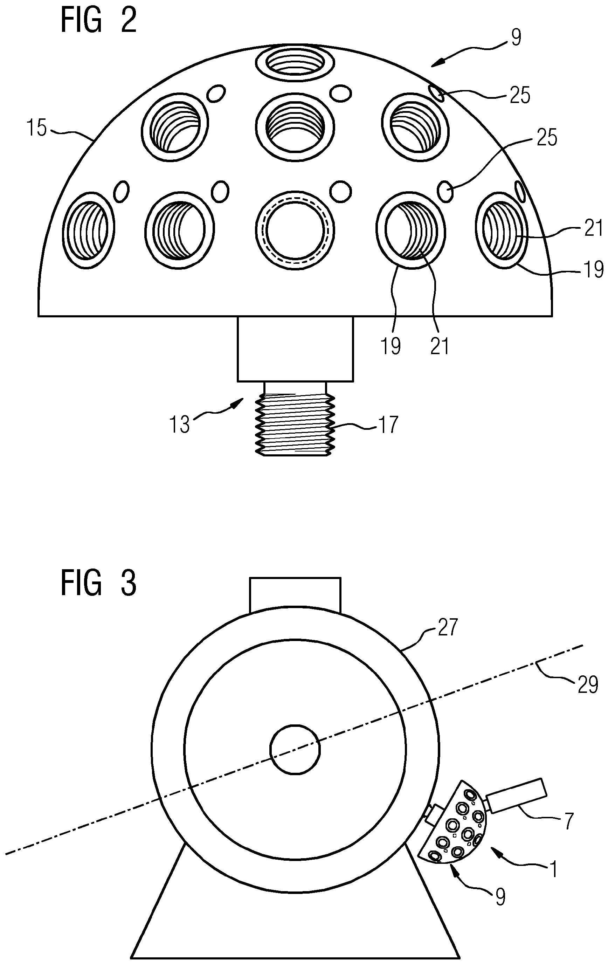

FIG 2 zeigt ein Ausführungsbeispiel einer Ausrichtvorrichtung 9 mit einem Befestigungszapfen 13. Der Befestigungszapfen 13 weist beispielsweise ein Zapfengewinde 17 auf, mit dem der Befestigungszapfen 13 an der Maschine 27 befestigbar ist. Der Träger 15 ist halbkugelartig ausgebildet und weist mehrere Befestigungsfassungen 19 auf, in denen der zweite Vibrationssensor 7 in voneinander verschiedenen Ausrichtungen befestigbar ist. Jede Befestigungsfassung 19 weist ein Befestigungsinnengewinde 21 auf, das zu einem Befestigungsaußengewinde 23 des zweiten Vibrationssensors 7 korrespondiert. Die Befestigungsfassungen 19 entsprechen voneinander verschiedenen Ausrichtungen des zweiten Vibrationssensors 7. Statt einer halbkugelartigen Form kann der Träger 15 auch eine andere Form aufweisen, beispielsweise die Form eines Paraboloiden oder eines Vielflächners.

Die Signalisierungsvorrichtung 11 wird kabelgebunden oder kabellos von der Auswerteeinheit 5 gesteuert und ist dazu eingerichtet, eine Position für den zweiten Vibrationssensor 7 zu dessen Ausrichten entlang der von der Auswerteeinheit 5 ermittelten Hauptschwingungsachse 29 anzuzeigen. In dem in FIG 2 gezeigten Ausführungsbeispiel der Ausrichtvorrichtung 9 weist die Signalisierungsvorrichtung 11 für jede Befestigungsfassung 19 ein Leuchtelement 25, beispielsweise eine Leuchtdiode, auf, das neben der Befestigungsfassung 19 an dem Träger 15 der Ausrichtvorrichtung 9 angeordnet ist.

FIG 3 zeigt beispielhaft eine Maschine 27, an der eine erfindungsgemäße Messvorrichtung 1 angeordnet ist, deren Ausrichtvorrichtung 9 wie in FIG 2 ausgebildet ist.

Von der Auswerteeinheit 5 der Messvorrichtung 1 wird die Hauptschwingungsachse 29 der von dem ersten Vibrationssensor 3 erfassten Maschinenschwingungen der Maschine 27 ermittelt. Ferner wird von der Auswerteeinheit 5 dasjenige Leuchtelement 25 der Signalisierungsvorrichtung 11 aktiviert, das neben derjenigen Befestigungsfassung 19 angeordnet ist, die der Ausrichtung des zweiten Vibrationssensors 7 entlang der Hauptschwingungsachse 29 entspricht. In diese Befestigungsfassung 19 wird der zweite Vibrationssensor 7 geschraubt und dadurch entlang der Hauptschwingungsachse 29 ausgerichtet. Anschließend werden von dem zweiten Vibrationssensor 7 Maschinenschwingungen der Maschine 27 entlang der Hauptschwingungsachse 29 erfasst.

Wenn sich die Hauptschwingungsachse 29 ändert, wird das bisher aktivierte Leuchtelement 25 deaktiviert und das die geänderte Hauptschwingungsachse 29 anzeigende Leuchtelement 25 wird aktiviert.

Ferner kann vorgesehen sein, bei einer Fehlausrichtung des zweiten Vibrationssensors 7, beispielsweise infolge einer Änderung der Hauptschwingungsachse 29, mit der Signalisierungsvorrichtung 11 ein Warnsignal, beispielsweise ein Blinken wenigstens eines Leuchtelements 25 oder/und eine Farbänderung des von der Signalisierungsvorrichtung 11 ausgegebenen Lichts, auszugeben, um auf die Fehlausrichtung hinzuweisen.

Statt die der Hauptschwingungsachse 29 entsprechende Befestigungsfassung 19 durch Aktivieren eines Leuchtelements 25 anzuzeigen, kann alternativ vorgesehen sein, die Befestigungsfassung 19 auf andere Weise, beispielsweise durch Ausgabe eines der Befestigungsfassung 19 zugeordneten Identifikators, z.B. einer Zahl, anzuzeigen.

Des Weiteren kann vorsehen sein, mit der Auswerteeinheit 5 aus den von dem ersten Vibrationssensor 3 erfassten Maschinenschwingungen neben der Hauptschwingungsachse 29 weitere Daten zu ermitteln, beispielsweise Effektivwerte der Maschinenschwingungen entlang der einzelnen Schwingungsachsen oder/und einen Kennwert gemäß der Norm DIN ISO 10816-3. Ferner kann vorgesehen sein, mit der Signalisierungsvorrichtung 11 einen Maschinenzustand der Maschine 27 zu signalisieren, beispielsweise über eine Farbe des von der Signalisierungsvorrichtung 11 ausgegebenen Lichts (z.B. Rot bei einem kritischen Maschinenzustand, Orange bei einer Annäherung an einen kritischen Maschinenzustand).

Statt einer Ausrichtvorrichtung 9, an der der zweite Vibrationssensor 7 in voneinander verschiedenen Ausrichtungen befestigbar ist, kann alternativ eine Ausrichtvorrichtung 9 mit einem Träger 15 vorgesehen sein, an dem der zweite Vibrationssensor 7 fest angeordnet oder anordenbar ist und der über ein Gelenk, beispielsweise über ein Kugelgelenk, bewegbar ist, um den zweiten Vibrationssensor 7 entlang der Hauptschwingungsachse 29 auszurichten. Dabei kann insbesondere der erste Vibrationssensor 3 an dem Träger 15 angeordnet sein und dazu verwendet werden, mit der Auswerteeinheit 5 eine momentane Ausrichtung des Trägers 15 zu ermitteln. Wenn sich die Ausrichtung des zweiten Vibrationssensors 7 der Hauptschwingungsachse 29 nähert, kann dies ferner durch eine optische oder akustische Signalisierungsvorrichtung 11, die von der Auswerteeinheit 5 gesteuert wird, durch wenigstens ein optisches oder akustisches Signal signalisiert werden. Die optische oder akustische Signalisierungsvorrichtung 11 kann an der Ausrichtvorrichtung 9 angeordnet oder separat von dieser ausgeführt sein und von der Auswerteeinheit 5 kabelgebunden oder kabellos steuerbar sein.

Ein weiteres Ausführungsbeispiel der Erfindung sieht vor, die von dem ersten Vibrationssensor 3 erfassten Maschinenschwingungen mit der Auswerteeinheit 5 zur Schwingungsanalyse auszuwerten und den zweiten Vibrationssensor 7 nur dann zu installieren, wenn anhand der von dem ersten Vibrationssensor 3 erfassten Maschinenschwingungen ein kritischer Maschinenzustand der Maschine 27 festgestellt wird. Der kritische Maschinenzustand kann beispielsweise optisch, akustisch oder über eine Schnittstelle signalisiert werden. Mit dem zweiten Vibrationssensor 7 werden dann die mit dem ersten Vibrationssensor 3 ermittelten Ergebnisse überprüft. Auf diese Weise kann der zweite Vibrationssensor 7 zur Überwachung mehrerer Maschinen 27 verwendet werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Messvorrichtung (1) zum Erfassen von Maschinenschwingungen einer Maschine (27), die Messvorrichtung (1) umfassend
- einen ersten Vibrationssensor (3) zum Erfassen von Maschinenschwingungen entlang wenigstens zweier nicht zueinander paralleler Schwingungsachsen,
- eine Auswerteeinheit (5) zum Ermitteln einer Hauptschwingungsachse (29) der von dem ersten Vibrationssensor (3) erfassten Maschinenschwingungen und
- einen zweiten Vibrationssensor (7), der zum Erfassen von Maschinenschwingungen entlang der von der Auswerteeinheit (5) ermittelten Hauptschwingungsachse (29) ausrichtbar ist, weniger Messachsen als der erste Vibrationssensor (3) aufweist und eine höhere Messgenauigkeit und/oder eine höhere Bandbreite für Schwingungsfrequenzen von Maschinenschwingungen und/oder ein besseres Anti-Aliasing-Verhalten und/oder ein besseres Signal-Rausch-Verhältnis als der erste Vibrationssensor (3) aufweist.

2. Messvorrichtung (1) nach Anspruch 1,
wobei der erste Vibrationssensor (3) drei Messachsen aufweist und/oder der zweite Vibrationssensor (7) eine Messachse aufweist.

3. Messvorrichtung (1) nach Anspruch 1 oder 2,
wobei der zweite Vibrationssensor (7) als ein piezoelektrischer Beschleunigungssensor ausgebildet ist.

4. Messvorrichtung (1) nach einem der vorhergehenden Ansprüche,
mit einer an der Maschine (27) anordenbaren Ausrichtvorrichtung (9) zum Ausrichten des zweiten Vibrationssensors (7) entlang der Hauptschwingungsachse (29).

5. Messvorrichtung (1) nach Anspruch 4,
wobei die Ausrichtvorrichtung (9) einen Träger (15) aufweist, an dem der zweite Vibrationssensor (7) anordenbar ist und der zum Ausrichten des zweiten Vibrationssensors (7) über ein Gelenk bewegbar ist.

6. Messvorrichtung (1) nach Anspruch 4 oder 5,
wobei der zweite Vibrationssensor (7) in voneinander verschiedenen Ausrichtungen an der Ausrichtvorrichtung (9) befestigbar ist.

7. Messvorrichtung (1) nach Anspruch 6,
wobei die Ausrichtvorrichtung (9) mehrere Befestigungsfassungen (19) aufweist, in denen der einachsige Vibrationssensor (7) in voneinander verschiedenen Ausrichtungen befestigbar ist.

8. Messvorrichtung (1) nach einem der Ansprüche 4 bis 7,
wobei der erste Vibrationssensor (3) an der Ausrichtvorrichtung (9) angeordnet ist.

9. Messvorrichtung (1) nach einem der vorhergehenden Ansprüche,
mit einer Signalisierungsvorrichtung (11), die von der Auswerteeinheit (5) direkt oder indirekt steuerbar und dazu eingerichtet ist, eine Position für den zweiten Vibrationssensor (7) zu dessen Ausrichten entlang der Hauptschwingungsachse (29) anzuzeigen.

10. Messvorrichtung (1) nach einem der vorhergehenden Ansprüche,
mit einer Signalisierungsvorrichtung (11), die von der Auswerteeinheit (5) direkt oder indirekt steuerbar und dazu eingerichtet ist, durch wenigstens ein optisches oder akustisches Signal zu signalisieren, ob der zweite Vibrationssensor (7) entlang der Hauptschwingungsachse (29) ausgerichtet ist.

11. Verfahren zum Erfassen von Maschinenschwingungen einer Maschine (27) mit einer Messvorrichtung (1) gemäß einem der vorhergehenden Ansprüche, wobei
- von dem ersten Vibrationssensor (3) Maschinenschwingungen entlang wenigstens zweier nicht zueinander paralleler Schwingungsachsen erfasst werden,
- von der Auswerteeinheit (5) eine Hauptschwingungsachse (29) der von dem ersten Vibrationssensor (3) erfassten Maschinenschwingungen ermittelt wird,
- der zweite Vibrationssensor (7) entlang der von der Auswerteeinheit (5) ermittelten Hauptschwingungsachse (29) ausgerichtet wird und
- von dem zweiten Vibrationssensor (7) Maschinenschwingungen entlang der von der Auswerteeinheit (5) ermittelten Hauptschwingungsachse (29) erfasst werden.

12. Verfahren nach Anspruch 11,
wobei von der Auswerteeinheit (5) zum Ermitteln der Hauptschwingungsachse (29) aus den mit dem ersten Vibrationssensor (3) erfassten Maschinenschwingungen für jede Schwingungsachse ein Messwertvektor, dessen Richtung parallel zu der Schwingungsachse ist und dessen Betrag ein Maß für eine Schwingungsstärke der Maschinenschwingungen entlang der Schwingungsachse ist, ermittelt wird, die für die Schwingungsachsen ermittelten Messwertvektoren zu einer Vektorsumme addiert werden und als Hauptschwingungsachse (29) eine Gerade ermittelt wird, die parallel zu der Vektorsumme verläuft.

13. Verfahren nach Anspruch 12,
wobei als Schwingungsstärke der Maschinenschwingungen entlang einer Schwingungsachse ein Extremwert oder ein Effektivwert oder ein Mittelwert oder ein Integral der erfassten Maschinenschwingungen ermittelt wird, oder wobei zum Ermitteln der Schwingungsstärke der Maschinenschwingungen entlang einer Schwingungsachse ein Histogramm der erfassten Maschinenschwingungen ermittelt und ausgewertet wird, oder wobei zum Ermitteln der Schwingungsstärke der Maschinenschwingungen entlang einer Schwingungsachse eine schnelle Fourier-Transformation der erfassten Maschinenschwingungen durchgeführt und ausgewertet wird.

14. Verfahren nach einem der Ansprüche 11 bis 13,
wobei der zweite Vibrationssensor (7) mit einer Ausrichtvorrichtung (9), die an der Maschine (27) angeordnet wird, entlang der Hauptschwingungsachse (29) ausgerichtet wird, indem der zweite Vibrationssensor (7) in einer zu der Hauptschwingungsachse (29) korrespondierenden Ausrichtung an der Ausrichtvorrichtung (9) befestigt wird, oder indem der zweite Vibrationssensor (7) an einem bewegbaren Träger (15) der Ausrichtvorrichtung (9) angeordnet wird und der Träger (15) zum Ausrichten des zweiten Vibrationssensors (7) bewegt wird.

15. Verfahren nach einem der Ansprüche 11 bis 14,
wobei mit einer von der Auswerteeinheit (5) direkt oder indirekt gesteuerten Signalisierungsvorrichtung (11) eine Position für den zweiten Vibrationssensor (7) zu dessen Ausrichten entlang der Hauptschwingungsachse (29) angezeigt wird und/oder mit wenigstens einem optischen oder akustischen Signal signalisiert wird, ob der zweite Vibrationssensor (7) entlang der Hauptschwingungsachse (29) ausgerichtet ist.
